# NOUVEAU FASCICULE DE BREVET EUROPEEN

(11) **EP 0 916 477 B2**
(45) Date de publication et mention de la décision concernant l'opposition: **07.05.2008**
(45) Mention de la délivrance du brevet: 22.12.2004
(21) Numéro de dépôt: 98440101.8
(22) Date de dépôt: 19.05.1998
(51) Int. Cl.: B29C 70/46, B29C 43/34, B29B 11/16

(54) **ProcÚdÚ de moulage d'une piÞce composite, et structure composite employÚe dans ce procÚdÚ**
Verfahren zur Herstellung eines Verbundwerkstoffgegenstandes, und eine in diesem Verfahren benutzte Verbundstruktur
Method for moulding a composite object, and composite structure used in said process

(30) Priorité: 13.11.1997 FR 9714461
(43) Date de publication de la demande: 19.05.1999
(73) Titulaire: Duqueine, Gilles, 69270 Fontaines sur Saone (FR)
(72) Inventeur: Duqueine, Gilles, 69270 Fontaines sur Saone (FR)
(74) Mandataire: Maureau, Philippe

(56) Documents cités:
- EP-A- 0 376 472
- EP-A- 0 415 436
- GB-A- 2 216 531
- JP-A- 59 062 112
- US-A- 4 339 490
- PATENT ABSTRACTS OF JAPAN vol. 015, no. 160 (M-1105), 22 avril 1991 & JP 03 030916 A (KURARAY CO LTD), 8 février 1991
- PATENT ABSTRACTS OF JAPAN vol. 013, no. 423 (C-638), 20 septembre 1989 & JP 01 160866 A (KAWASAKI STEEL CORP), 23 juin 1989
- PATENT ABSTRACTS OF JAPAN vol. 008, no. 061 (M-284), 23 mars 1984 & JP 58 211415 A (MITSUBISHI RAYON KK), 8 décembre 1983

## Description

La présente invention a pour objet un procédé de moulage d'une pièce en matériau composite ainsi qu'une structure en matériau composite destinée à être introduite dans un moule ou à l'entrée d'un moule de formage.

On connaît déjà différents procédés de moulage de pièces en materiau composite, qui mettent généralement en oeuvre une nappe non tissée, formée de fibres de renfort noyée dans une matrice thermodurcissable ou thermoplastique. Les fibres peuvent être constituées de verre, de carbone ou d'aramide, alors que la matrice peut être de type époxyde, phénolique, ou autre.

L'un de ces procédés connus consiste à découper dans la nappe des plis dont les dimensions correspondent à celles de l'empreinte du moule dans laquelle la pièce composite est destinée à être formée. On dispose alors les plis les uns au-dessus des autres avec des orientations différentes, puis on les comprime et on chauffe l'empilement ainsi formé à une température appropriée. On obtient ainsi la pièce désirée.

Ce procédé présente cependant certains inconvénients. En effet, il nécessite une découpe précise de la nappe non tissée, dans la mesure où chaque pli doit être réalisé dans des dimensions voisines de celles de l'empreinte du moule. De plus, dans le cas où le moule possède des portions s'étendant dans des directions différentes, il est nécessaire de placer les uns au-dessus des autres des plis de dimensions réduites qui ne sont pas parallèles entre eux, ce qui est préjudiciable à la résistance mécanique de la pièce formée. Dans tous les cas, l'intervention manuelle d'un opérateur s'avère nécessaire dans une mesure importante, ce qui augmente le risque d'erreurs et s'avère préjudiciable à la reproduction des pièces.

Un autre procédé de moulage de pièces composites consiste à introduire dans le moule tout d'abord des fibres non imprégnées, puis un matériau thermodurcissable. Ce procédé présente cependant l'inconvénient que l'homogénéité de la structure composite ainsi formée n'est pas satisfaisante, en sorte que la pièce obtenue présente des zones de rupture préférentielles.

On connaît également un procédé de moulage par thermocompression de strates ou de petits carreaux de fibres tissées préimprégnées disposées de manière aléatoire dans un moule. Toutefois ce procédé présente l'inconvénient que les pièces ne peuvent pas répondre à des critères particuliers de résistance, si bien qu'il est réservé à la fabrication de pièces de formes simples et de relativement grandes dimensions, telles que des tuyères de propulseurs à poudre. D'autre part, une armature tissée empêcherait un bon fluage de la matière lors du moulage de pièces de formes complexes. On connaît également, par le document FR-A-2.740.149, un procédé de production d'un matériau de moulage en feuille, qui comprend le découpage d'un matériau composite, contenant des fibres de renfort disposées de manière unidirectionnelle ou tissées, en petits morceaux d'une forme prédéterminée, l'assemblage des morceaux à plat, en plusieurs couches, leur chauffage et leur compression, de manière à obtenir une feuille stratifiée qui peut ensuite être moulée.

Ce procédé présente également un inconvénient, du fait que les fibres de renfort sont disposées dans des plans, en sorte que le matériau obtenu est d'une utilisation limitée, étant en l'occurrence destiné avant tout à la fabrication par moulage d'une coquille de protection des orteils pour une chaussure de sécurité, apte essentiellement à supporter des efforts en pression.

En outre, le matériau obtenu ne permet pas la réalisation de pièces qui soient à la fois de forme complexe et d'une grande résistance. En effet, une pièce de forme complexe obtenue par moulage est réalisée généralement par le fluage du matériau sous pression. Or dans le cas d'un matériau armé, tel que la feuille obtenue selon le document FR-A-2.740.149, les fibres de renfort étant agencées préalablement en réseau, c'est prioritairement la matière d'imprégnation qui flue, en sorte que la préparation des fibres de renfort n'est pas homogène et que la partie de la pièce résultant du fluage n'est pas ou peu renforcée.

Le procédé connu du document JP-A-01 160 866 comprend le découpage d'éléments dont la taille varie entre 4 et 30mm. dans une nappe non tissée d'un produit carbone/carbone

La présente invention a pour but proposer un procédé de moulage de pièces en matériau composite permettant de réaliser, de manière aisée et à faible coût, des pièces de formes complexes et d'une grande résistance, cette dernière pouvant se manifester de manière privilégiée dans l'une ou l'autre direction.

Le procédé objet de la présente invention est défini par les caractéristiques de la revendication 1.

Le procédé selon l'invention permet un gain de temps appréciable dans la mesure où elle fait appel à la découpe de la nappe peut être réalisée de manière non précise, en vue de former des éléments dont les dimensions n'ont pas à être définies exactement.

D'autre part, ce procédé permet la réalisation de pièces d'architecture complexe, comme des pièces tridimensionnelles présentant des nervures perpendiculaires à la direction principale de la pièce, ou bien des bossages, des feuillures, des lamages ou des inserts.

En outre, du fait que l'on part d'une nappe non tissée dont la composition, le grammage, et l'orientation des fibres, sont parfaitement connus, la pièce réalisée conformément au procédé de l'invention présente une homogénéité satisfaisante, sans zones fragilisées. Enfin, le coefficient de retrait de la pièce est sensiblement nul dans le cas du carbone et faible dans le cas de la fibre de verre, de sorte que le dimensionnement de ces pièces est particulièrement précis et reproductible.

Dans un premier mode de réalisation de l'invention, on dispose hors du moule les éléments obtenus par découpe en un enchevetrement tridimensionnel desdits éléments orientés dans toutes les directions, de manière à réaliser une structure composite destinée à être introduite dans le moule ou à l'entrée du moule. La structure composite ainsi formée présente une grande facilitée de stockage, de manipulation et de transport. Elle peut être comprimée de manière à réduire son encombrement. Elle peut également être préformée de manière adaptée à la forme du moule dans lequel ou à l'entrée duquel elle est destinée à être introduite. Cette structure peut également présenter la forme d'un lingot de grande longueur et être débitée en fonction des dimensions des pièces que l'on souhaite réaliser.

Dans ce mode de réalisation, selon une caractéristique de l'invention, on enroule certains des éléments découpés autour et le long d'au moins un bossage dont est pourvue l'empreinte du moule, notamment un insert. Ceci permet la réalisation de pièces en matériau composite percées d'orifices, destinée notamment au passage d'un arbre, comme par exemple une manivelle d'un pédalier de bicyclette. Les pièces ainsi réalisées présentent une rigidité remarquable au niveau des parois délimitant ces orifices.

Dans un second mode de réalisation de l'invention, on remplit l'empreinte du moule au moyen desdits éléments de manière à former l'enchevetrement tridimensionnel dans l'empreinte du moule. Ce mode de réalisation convient tout particulièrement à un moule de structure relativement simple, dont le volume est aisément accessible.

Dans un autre mode de réalisation de l'invention, on dispose lesdits éléments à l'entrée du moule et on les bourre à l'intérieur du moule. Ce bourrage est réalisé sous une pression comprise entre 10 et 500 bars. Ce mode de réalisation convient à des moules de structure complexe présentant, notamment, des recoins et des renfoncements.

Conformément à l'invention, les éléments sont des faisceaux sensiblement rectangulaires de fibres noyées dans la matrice. De manière avantageuse, selon la pièce à réaliser, les grands côtés des faisceaux sont sensiblement parallèles à la direction des fibres, ce qui confère une rigidité accrue à la pièce définitive.

L'invention a également pour objet une structure définie par les caractéristiques de la revendication 9.

De manière avantageuse, la structure est préformée de manière adaptée à la forme de l'empreinte du moule dans lequel ou à l'entrée duquel elle est destinée à être introduite.

De manière également avantageuse, la structure est réalisée à partir de fibres de renfort différentes entre elles, choisies notamment mais non exclusivement à partir de fibres de verre, de carbone et d'aramide. L'enchevêtrement de ces fibres peut conférer à la pièce moulée notamment un aspect multicolore original. De plus, chaque fibre confère à la pièce moulée une composante de résistance particulière, en flexion, traction, torsion ou cisaillement, ce qui améliore ou modifie les caractéristiques mécaniques de cette dernière.

En fonction des caractéristiques de résistance requises de la pièce à fabriquer, les éléments découpés seront orientés préférentiellement dans une ou plusieurs directions.

De manière générale, lesdits éléments sont de forme allongée, dans le sens des fibres, et la structure est constituée de ces éléments disposés en vrac selon l' enchevetrement tridimensionnel desdits éléments orientés dans toutes les directions.

Il est toutefois possible de réaliser une structure dont la majorité des éléments ont une orientation préférentielle.

Des mises en oeuvre préférentielles du procédé et de la stucture selon la présente invention sont définies dans les revendications dépendantes.

Les avantages et les caractéristiques de la présente invention ressortiront plus clairement de la description qui suit et qui se rapporte au dessin annexé, lequel est fourni à titre de simple illustration de l'invention, vis-à-vis de laquelle il ne présente aucun caractère limitatif.

Dans le dessin annexé :
- la figure 1 représente une vue schématique d'une structure composite selon l'invention.
- la figure 2 représente une vue schématique en perspective d'un moule destiné à la mise en oeuvre d'un premier mode de réalisation de l'invention.
- les figures 3, 4 et 5 représentent des vues schématiques en coupe illustrant trois phases successives du premier mode de réalisation de l'invention.
- les figures 6 et 7 représentent des vues schématiques en coupe illustrant un second mode de réalisation de l'invention.
- les figures 8 et 9 représentent chacune une vue schématique en perspective d'un dispositif permettant la réalisation d'une structure selon l'invention.
- la figure 10 représente une vue schématique en perspective et en éclaté d'un autre dispositif permettant la réalisation d'une structure selon l'invention.

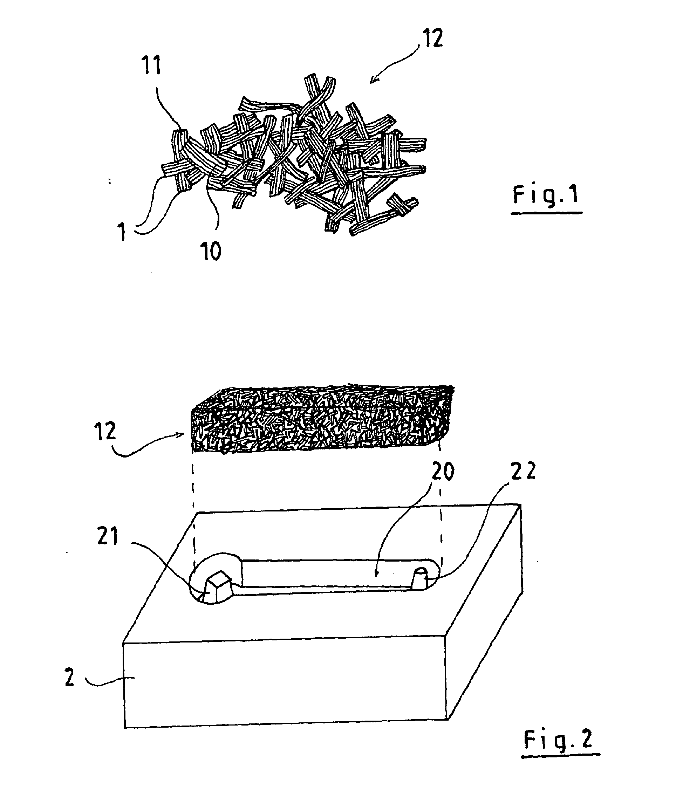

En référence à la figure 1 on peut voir des éléments 1 obtenus dans la première étape du procédé selon l'invention, à savoir le découpage d'une nappe composite non tissée, formée de fibres 10 de renfort s'étendant sensiblement parallèlement les unes aux autres, et noyées dans une matrice 11 thermodurcissable ou thermoplastique.

Les éléments 1 sont des faisceaux sensiblement rectangulaires, formés à partir d'une découpe grossière de la nappe. Les dimensions de ces faisceaux sont variables en fonction des dimensions de la pièce à exécuter et de la forme de l'empreinte du moule. Leur longueur est comprise entre 50 et 100 mm, et leur largeur est par exemple comprise entre 1 et 20 mm, de préférence entre 3 et 6 mm.

L'étape suivante consiste à enchevêtrer les éléments 1 selon un enchevetrement desdits élement orientés dans toutes les directions, de manière à former une structure composite 12 enchevêtrée.

De manière avantageuse, la structure 12 est ensuite comprimée, ce qui réduit son encombrement et facilite donc son stockage et sa manutention.

Il s'agit ensuite de disposer la structure comprimée 12 dans l'empreinte d'un moule 2, représenté à la figure 2. Il s'agit, dans l'exemple représenté, d'un moule destiné à la fabrication d'une manivelle pour pédalier de bicyclette. Ce moule 2, dont la structure est classique, possède à cet effet une empreinte 20 allongée et qui se trouve pourvue d'un pion 21 conique à section carrée et d'un insert 22 permettant la formation, dans la manivelle définitive, de deux orifices de passage des axes du pédalier et de la pédale.

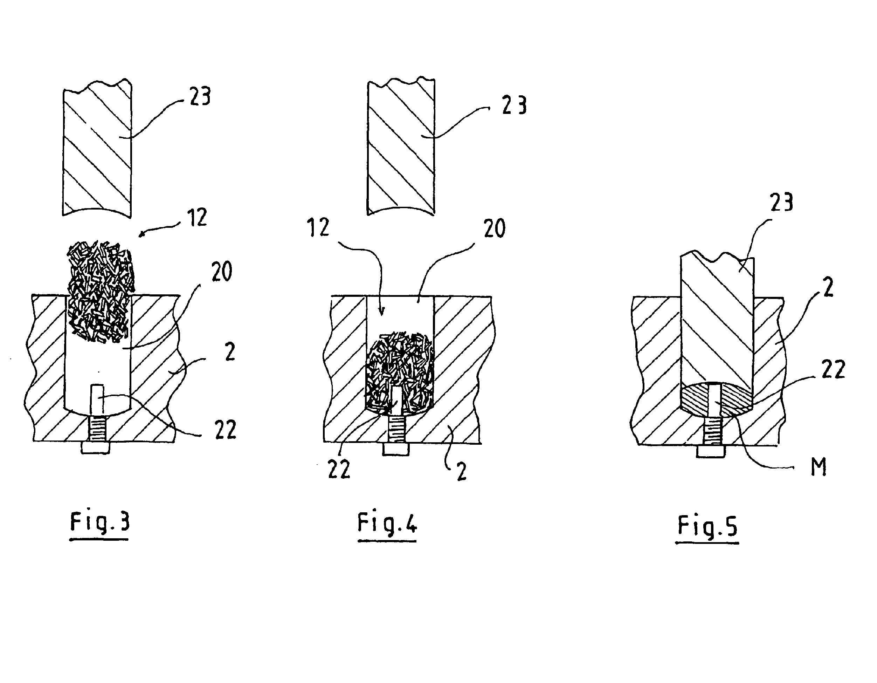

Comme le montre la figure 2, on préforme la structure 12 comprimée, de manière adaptée à la forme du moule 2. Ce préformage peut être réalisé automatiquement, ce qui est particulièrement avantageux en termes de main d'oeuvre. Puis, comme le montrent les figures 3 et 4, on bourre l'empreinte 20 du moule 2 au moyen de la structure 12 préformée.

Les fibres 10 de la structure 12 s'enroulent autour de l'insert 22 sans qu'il y ait création d'une zone discontinue comme cela est le cas dans le procédé de l'art antérieur utilisant des plis superposés. On peut également enrouler des éléments 1 autour de l'insert 22, ou bien réaliser des éléments de structure de forme particulière où les éléments sont arrangés dans une direction particulière, tels qu'en forme d'anneau par exemple pour constituer le passage d'un arbre.

Puis, comme cela est représenté à la figure 5, on utilise un poinçon 23 de manière classique, afin de matricer la manivelle M.

Dans l'exemple considéré, la nappe est réalisée à partir de fibres de carbone noyées dans une résine époxyde, les fibres étant présentes à raison de 60% en poids. La pression de bourrage est comprise entre 10 et 500 bars. Le volume de l'empreinte du moule renferme environ 80 à 160 grammes d'éléments composites 1. Il est à noter que, conformément à l'invention, la composition de ces éléments 1 est parfaitement connue puisqu'ils sont formés à partir d'une nappe de composition elle-même connue. On chauffe le moule à une température d'environ 150°C sous une pression comprise entre 10 et 100 bars durant 3 à 60 minutes.

La manivelle ainsi formée présente un prix de revient plus bas que celles de l'art antérieur, puisque son temps nécessaire de fabrication est réduit. De plus, elle bénéficie d'une résistance mécanique satisfaisante, dans la mesure où sa composition est parfaitement connue et homogène en tout point de la manivelle. En particulier, la continuité des fibres autour du pion 21 et de l'insert 22 du moule 2, confère une excellente rigidité aux parois des orifices dont est pourvue la manivelle M.

Du fait de l'enchevêtrement des éléments 1, la manivelle M une fois réalisée présente un aspect général proche de celui du bois aggloméré ce qui lui confère une esthétique originale.

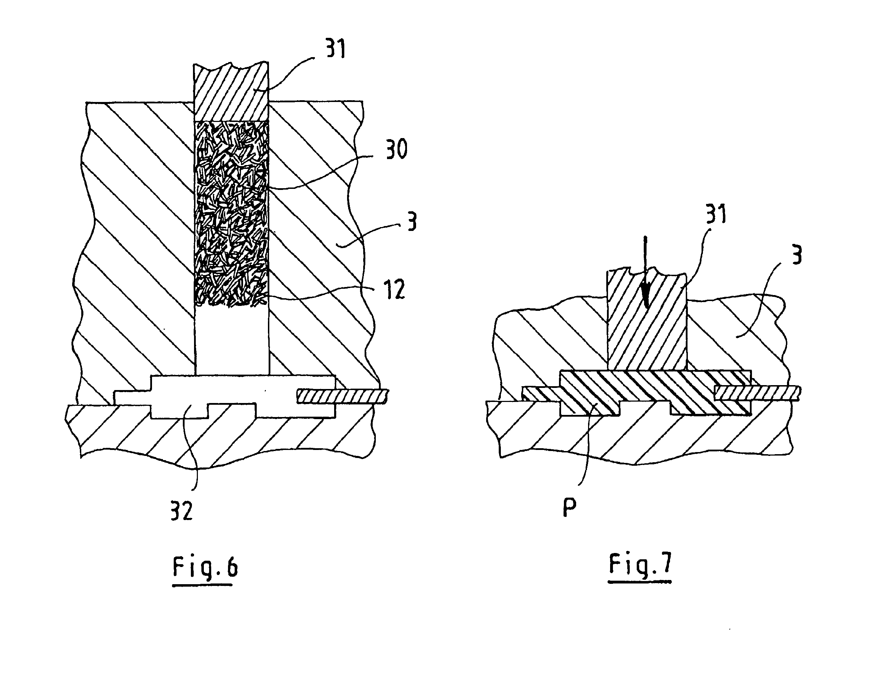

Les figures 6 et 7 représentent un autre mode de réalisation de l'invention. Le moule 3 qui y est illustré possède une empreinte 32 de structure complexe, avec des recoins et des renfoncements, de sorte que le volume de cette empreinte 32 n'est pas accessible dans son intégralité. On dispose la structure composite 12 comprimée et préformée, à l'entrée 30 du moule 3, puis on fait descendre un piston 31 qui opère une pression comprise par exemple entre 10 et 500 bars.

L'action du piston 31 assure la répartition de la structure dans la totalité du volume de l'empreinte 32 du moule 3. Cette pression élevée permet en outre une répartition homogène des fibres préimprégnées au niveau de l'ensemble du volume de l'empreinte 32 du moule 3, ce qui garantit une tenue mécanique satisfaisante de la pièce P une fois réalisée.

Les modes de réalisation du procédé de l'invention illustrés en référence aux figures 3 à 7, s'apparentent à un matriçage de fibres noyées.

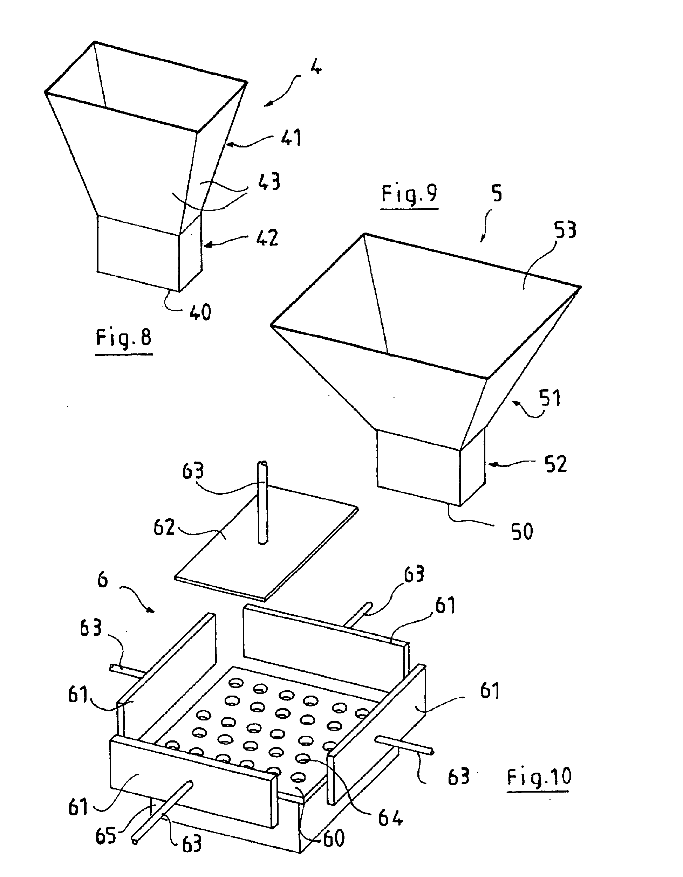

Si on se réfère maintenant aux figures 8 et 9, on peut voir des dispositifs 4 et 5 permettant la réalisation d'une structure 12, non représentée, en favorisant une orientation préférentielle des éléments 1.

Ces dispositifs 4 et 5 consistent en des trémies destinées à être alimentées en éléments 1, et à la sortie desquelles est formée une structure composite 12.

En référence à la figure 8, la trémie 4 présente une ouverture de sortie 40 de forme correspondant sensiblement à celle que doit avoir la structure 12, en l'occurrence l'ouverture de sortie 40 est de forme rectangulaire afin d'obtenir une structure 12 en forme de lingot.

La trémie 4 comporte deux parties, une partie 41, qui de manière classique est évasée, prolongée jusqu'à l'ouverture de sortie 40 par une partie 42 de forme tubulaire, de section rectangulaire. D'autre part, la partie 41 est peu évasée, c'est-à-dire que ces parois 43 sont peu inclinées par rapport à la verticale.

Lors de l'alimentation de la trémie 4 en éléments 1, ceux-ci sont immédiatement entraînés, sans avoir le temps de s'orienter sur les parois 43, vers la partie tubulaire 42 où ils s'enchevêtrent pour former la structure composite, éventuellement en se pliant selon leurs dimensions et celles internes de la partie tubulaire 42.

Si on se réfère maintenant à la figure 9, on peut voir que la trémie 5 présente également deux parties, une partie évasée 51 et partie tubulaire 52. La partie 51 est plus évasée que la partie 41 de la trémie 4, ce qui permet une descente freinée des éléments 1 vers l'ouverture de sortie 50, et favorise l'orientation de ceux-ci. On notera qu'afin d'obtenir une orientation préférentielle, il convient d'alimenter la trémie 5 progressivement, et en faisant tomber les éléments 1 contre la paroi 53 de la partie 51 correspondant à cette orientation.

Si on se réfère maintenant à la figure 10, on peut voir un autre dispositif permettant la réalisation d'une structure composite 12, non représentée. Ce dispositif se présente sous la forme d'un réceptacle 6 constitué d'un fond 60, de parois latérales 61 et d'un couvercle 62.

Les parois latérales 61 et le couvercle 62 sont mobiles en translation sous l'action de moyens de poussée 63, tels que des vérins, de manière à permettre une variation du volume intérieur du réceptacle 6.

On notera que dans le mode de réalisation représenté, toutes les parois latérales sont mobiles, alors qu'il est possible qu'une ou deux d'entre elles soient fixes.

Le fond 60 est percé d'une multiplicité d'orifices 64, et il est connecté à un moyen 65 de production d'un flux d'air, tel qu'une soufflerie, apte à agir à l'intérieur du réceptacle 6.

En pratique, des éléments 1 sont déversés dans le réceptacle 6. Le flux d'air crée dans le réceptacle 6 des remous permettant aux éléments 1 de demeurer en suspension au-dessus du fond 60, et de se déplacer et de s'orienter dans toutes les directions. Puis, par le rapprochement de deux parois 61 en vis-à-vis, on favorise l'orientation d'une majorité des éléments 1 parallèlement à ces parois, enfin on comprime les éléments 1, soit par la descente du couvercle 62 soit par prolongement du déplacement des parois 61, afin d'obtenir une structure 12.

On notera qu'afin de favoriser le déplacement des éléments 1 dans le réceptacle 6 sous l'action du flux d'air, la quantité d'éléments 1 est choisie en fonction du volume initial du réceptacle 6.

## Revendications

1. Procédé de moulage d'une pièce en matériau composite à partir d'une nappe non tissée de fibres (10) de renfort, noyées dans une matrice (11) thermodurcissable ou thermoplastique, s'étendant parallèlement les unes aux autres le procédé comprenant les étapes consistant à :
(i) découper de ladite nappe de fibres (10) noyées dans la matrice (11) en une multiplicité d'éléments (1),
(ii) réaliser un enchevêtrement tridimensionnel desdits éléments (1) orientés dans toutes les directions,
(iii) réaliser le moulage sous pression de l'enchevêtrement tridimensionnel,
lesdits éléments (1) étant des éléments sensiblement rectangulaires dont les grands cotés sont sensiblement parallèles à la direction des fibres, présentant longitudinalement aux fibres une longueur comprise entre 50 et 100 mm.

2. Procédé selon la revendication 1, **caractérisé en ce que** chaque élément (1) présente transversalement aux fibres une largeur comprise entre 1 et 20 mm.

3. Procédé selon la revendication 1 ou la revendication 2, **caractérisé en ce qu'**on met en place les éléments (1) selon l'enchevêtrement tridimensionnel hors du moule (2, 3), de manière à réaliser une structure composite (12) destinée à être introduite dans le moule (2) ou à l'entrée (30) du moule (3).

4. Procédé selon la revendication 3, **caractérisé en ce qu'**on préforme et/ou on comprime la structure composite (12) avant son introduction dans le moule (2) ou à l'entrée (30) du moule (3).

5. Procédé selon la revendication 1 ou la revendication 2, **caractérisé en ce qu'**on on remplit l'empreinte du moule (2) au moyen des éléments (1) de manière à former l'enchevêtrement tridimensionnel dans l'empreinte dudit moule (2).

6. Procédé selon la revendication 1 ou la revendication 2, **caractérisé en ce qu'**on dispose les éléments (1) selon l'enchevêtrement tridimensionnel à l'entrée (30) du moule (3) et on bourre lesdits éléments (1) à l'intérieur du moule (3).

7. Procédé selon l'une des revendications 1 à 3, **caractérisé en ce qu'**on enroule certains des éléments (1) autour et le long d'au moins un bossage (21, 22) dont est pourvue l'empreinte du moule (2), notamment un insert (22).

8. Procédé selon l'une quelconque des revendications précédentes **caractérisé en ce qu'**on arrange tridimensionnellement les éléments (1) en favorisant une orientation particulière.

9. Structure en matériau composite (12) destinée à être introduite dans un moule (2) ou à l'entrée (30) d'un moule de formage (3), **caractérisée en ce qu'**elle est réalisée à partir d'un enchevêtrement tridimensionnel d'une multiplicité d'éléments (1) orientés dans toutes les directions découpés dans une nappe non tissé de fibres (10) de renfort, noyées dans une matrice (11) thermodurcissable ou thermoplastique s'étendant parallèlement les unes aux autres, sensiblement, rectangulaire dont les grands cotés sont sensiblement parallèles à la direction des fibres, présentant longitudinalement aux fibres une longueur comprise entre 50 et 100 mm.

10. Structure selon la revendication 9, **caractérisé en ce que** chaque élément (1) présente, transversalement aux fibres, une largeur comprise entre 1 et 20 mm.

11. Structure selon la revendication 9 ou la revendication 10, **caractérisée en ce qu'**elle est préformée de manière adaptée à la forme de l'empreinte du moule (2) dans lequel ou à l'entrée (30) duquel elle est destinée à être introduite.

12. Structure l'une des revendications 9 à 11, **caractérisée en ce qu'**elle est réalisée à partir de fibres (10) de renfort différentes entre elles.

13. Structure selon l'une quelconque des revendications 9 à 12, **caractérisée en ce qu'**on arrange tridimensionnellement les éléments (1) en favorisant une orientation particulière.

## Claims

1. Process for moulding a part made of a composite based on a non-woven web of reinforcing fibres (10) that are embedded in a thermoset matrix or thermoplastic matrix (11) and lie parallel to one another, the process comprising the steps consisting in:
(i) cutting the said web of fibres (10) embedded in the matrix (11) into a multiplicity of elements (1);
(ii) making a three-dimensional entanglement of the said elements (1) oriented in all directions; and
(iii) compression-moulding the three-dimensional entanglement;
the said elements (1) being elements that are approximately rectangular, the long sides of which are approximately parallel to the direction of the fibres and have a length, longitudinally to the fibres, of between 50 and 100 mm.

2. Process according to Claim 1, **characterized in that** each element (1) has a width, transversely to the fibres, of between 1 and 20 mm.

3. Process according to Claim 1 or Claim 2, **characterized in that** the elements (1) are positioned in the three-dimensional entanglement outside of the mould (2, 3) so as to produce a composite structure (12) intended to be introduced into the mould (2) or into the inlet (30) of the mould (3).

4. Process according to Claim 3, **characterized in that** the composite structure (12) is preformed and/or compressed before it is introduced into the mould (2) or into the inlet (30) of the mould (3).

5. Process according to Claim 1 or Claim 2, **characterized in that** the impression of the mould (2) is filled by means of the elements (1) so as to form the three-dimensional entanglement in the impression of the said mould (2).

6. Process according to Claim 1 or Claim 2, **characterized in that** the elements (1) are placed in the three-dimensional entanglement in the inlet (30) of the mould (3) and the said elements (1) are packed into the mould (3).

7. Process according to one of Claims 1 to 3, **characterized in that** some of the elements (1) are wrapped around and along at least one boss (21, 22) with which the impression of the mould (2) is provided, especially an insert (22).

8. Process according to any one of the preceding claims, **characterized in that** the elements (1) are arranged three-dimensionally, while favouring one particular orientation.

9. Composite structure (12) intended to be introduced into a mould (2) or into the inlet (30) of a forming mould (3), **characterized in that** it is produced from a three-dimensional entanglement of a multiplicity of elements (1) oriented in all directions cut from a web of non-woven reinforcing fibres (10) that are embedded in a thermoset matrix or thermoplastic matrix (11) and lie parallel to one another, the elements being approximately rectangular, the long sides of which are approximately parallel to the direction of the fibres and have a length, longitudinally to the fibres, of between 50 and 100 mm.

10. Structure according to Claim 9, **characterized in that** each element (1) has a width, transversely to the fibres, of between 1 and 20 mm.

11. Structure according to Claim 9 or Claim 10, **characterized in that** it is preformed so as to match the shape of the impression of the mould (2) into which, or at the inlet (30) of which, it is intended to be introduced.

12. Structure according to one of Claims 9 to 11, **characterized in that** it is produced from reinforcing fibres (10) that differ among themselves.

13. Structure according to any one of Claims 9 to 12, **characterized in that** the elements (1) are arranged three-dimensionally, while favouring one particular orientation.

## Patentansprüche

1. Gießverfahren zur Herstellung von Verbundwerkstoffteilen aus einem Vliesstoff, der aus in einer warmhärtenden oder thermoplastischen Matrix (11) eingebetteten, parallel zueinander verlaufenden Verstärkungsfasern (10) gebildet ist, das Verfahren umfassend folgende Schritte:
(i) Zerschneiden des aus in der Matrix (11) eingebetteten Fasern (10) bestehenden Vliesstoffes in eine Vielzahl an Elementen (1),
(ii) dreidimensionales Verwickeln der Elemente (1), die in allen Richtungen orientiert sind,
(iii) Druckgießen der dreidimensionalen Verwicklung, wobei die Elemente (1) im Wesentlichen rechteckige Elemente sind, deren Langseiten im Wesentlichen parallel zur Faserrichtung verlaufen und längs der Fasern eine Länge aufweisen, die zwischen 50 und 100 mm beträgt.

2. Verfahren nach Anspruch 1, **dadurch gekennzeichnet, dass** jedes Element (1) quer zu den Fasern eine Breite zwischen 1 und 20 mm aufweist.

3. Verfahren nach Anspruch 1 oder Anspruch 2, **dadurch gekennzeichnet, dass** die Elemente (1) außerhalb der Form (2, 3) derart in die dreidimensionale Verwicklung gebracht werden, dass eine Verbundstruktur (12) entsteht, die in die Form (2) einführbar bzw, an den Eingang (30) der Form (3) heranführbar ist.

4. Verfahren nach Anspruch 3, **dadurch gekennzeichnet, dass** die Verbundstruktur (12) vor deren Einführung in die Form (2) bzw, vor deren Heranführen an den Eingang (30) der Form (3) vorgeformt und/oder gepresst wird.

5. Verfahren nach Anspruch 1 oder Anspruch 2, **dadurch gekennzeichnet, dass** der Hohlraum der Form (2) mit den Elementen (1) derart ausgefüllt wird, dass im Hohlraum der Form (2) die dreidimensionale Verwicklung entsteht.

6. Verfahren nach Anspruch 1 oder Anspruch 2, **dadurch gekennzeichnet, dass** die Elemente (1) am Eingang (30) der Form (3) in der dreidimensionalen Verwicklung positioniert werden und die Elemente (1) in das Innere der Form (3) gestopft werden.

7. Verfahren nach einem der Ansprüche 1 bis 3, **dadurch gekennzeichnet, dass** manche der Elemente (1) um mindestens einen im Hohlraum der Form (2) vorgesehenen Zapfen (21, 22) herum sowie entlang desselben geführt werden, wobei dieser Zapfen insbesondere ein Einlegeteil (22) ist.

8. Verfahren nach einem der vorhergehenden Ansprüche, **dadurch gekennzeichnet, dass** die Elemente (1) dreidimensional angeordnet werden, wobei eine besondere Orientierung bevorzugt wird.

9. Struktur aus Verbundwerkstoff (12) zur Einführung in eine Form (2) bzw. zum Heranführen an den Eingang (30) eines Formwerkzeugs (3), **dadurch** gekennzeichet, dass sie aus einer dreidimensionalen Verwicklung einer Vielzahl an Elementen (1) hergestellt ist, die in allen Richtungen orientiert sind und aus einem Vliesstoff, der aus in einer warmhärtenden oder thermoplastischen Matrix (11) eingebetteten, parallel zueinander verlaufenden Verstärkungsfasern (10) gebildet ist, ausgeschnitten wurden und im Wesentlichen rechteckige Elemente sind, deren Langseiten im Wesentlichen parallel zur Faserrichtung verlaufen und längs der Fasern eine Länge aufweisen, die zwischen 50 und 100 mm beträgt.

10. Struktur nach Anspruch 9, **dadurch gekennzeichnet, dass** jedes Element (1) quer zu den Fasern eine Breite zwischen 1 und 20 mm aufweist.

11. Struktur nach Anspruch 9 oder Anspruch 10, **dadurch gekennzeichnet, dass** sie derart vorgeformt wird, dass sie der Kontur des Hohlraums der Form (2), in die sie eingeführt bzw. an deren Eingang (30) sie herangeführt werden soll, entspricht.

12. Struktur nach einem der Ansprüche 9 bis 11, **dadurch gekennzeichnet, dass** sie aus Verstärkungsfasern (10) hergestellt ist, die untereinander verschieden sind.

13. Struktur nach einem der Ansprüche 9 bis 12, **dadurch gekennzeichnet, dass** die Elemente (1) dreidimensional angeordnet werden, wobei eine besondere Orientierung bevorzugt wird.
